# EUROPÄISCHE PATENTANMELDUNG

(11) **EP 3 587 863 A1**
(43) Veröffentlichungstag der Anmeldung: **01.01.2020**
(21) Anmeldenummer: 18179589.9
(22) Anmeldetag: 25.06.2018
(51) Int. Cl.: F16H 37/04, F16H 1/46

(54) **PLANETENGETRIEBE, ANTRIEBSSTRANG, WINDKRAFTANLAGE UND INDUSTRIE-APPLIKATION**

(71) Anmelder: Flender GmbH, 46395 Bocholt (DE)
(72) Erfinder: Daners, Dominikus, 45701 Herten (DE); Klein-Hitpass, Arno, 52074 Aachen (DE)
(74) Vertreter: Maier, Daniel Oliver

(57) **Zusammenfassung**

Die Erfindung betrifft ein Planetengetriebe (10), das zumindest drei hintereinander geschaltete Getriebestufen (20, 30, 40) umfasst. Eine erste und eine zweite Getriebestufe (20, 30) sind dabei als Planetenstufen (19) ausgebildet sind. Erfindungsgemäße ist die dritte Getriebestufe (40) als Planetenstufe (19) mit einer stationären Getriebekomponente (11) ausgebildet ist. Alternativ ist die dritte Getriebestufe (40) als Stirnradstufe (21) ausgebildet und wiederum mit einer vierten Getriebestufe (50) gekoppelt, die auch als Stirnradstufe (21) ausgebildet ist. Die Erfindung betrifft auch einen Antriebsstrang (60) einer Windkraftanlage (70), in der ein entsprechendes Planetengetriebe (10) als Getriebe (66) eingesetzt wird. Darüber hinaus betrifft die Erfindung eine Windkraftanlage (70), die mit einem entsprechenden Antriebsstrang (60) ausgerüstet ist. Ferner betrifft die Erfindung eine Industrie-Applikation (80), die als Getriebe (66) über ein entsprechendes Planetengetriebe (10) verfügt.

## Beschreibung

Die Erfindung betrifft Planetengetriebe mit einer Mehrzahl an Getriebestufen und einen Antriebsstrang für eine Windkraftanlage, der mit einem entsprechenden Planetengetriebe ausgestattet ist. Die Erfindung betrifft auch eine Windkraftanlage, die über einen entsprechenden Antriebsstrang verfügt. Ferner betrifft die Erfindung eine Industrie-Applikation, die mit einem erfindungsgemäßen Planetengetriebe ausgestattet ist.

Aus der bisher nicht veröffentlichten Europäischen Patentanmeldung mit dem Aktenzeichen EP 17152660.1 ist ein Planetengetriebe für eine Windkraftanlage bekannt, das eine erste und eine zweite Getriebestufe aufweist, wobei die zweite Getriebestufe mit einer Stirnradstufe verbunden ist.

Die Offenlegungsschrift DE 10 2011 106 534 A1 offenbart ein Getriebe für eine Windkraftanlage, das zwei Planetenstufen umfasst, die mit einem Summiergetriebe verbunden sind. Das Summiergetriebe ist über eine Stirnradstufe mit einem Generator verbunden.

Ferner ist aus dem Dokument WO 2016/016645 A2 ein Getriebe bekannt, das zum Antreiben einer Schneckenzentrifuge ausgebildet ist. Das Getriebe weist zwei Eingangswellen auf, die mit unterschiedlichen Planetenstufen verbunden sind. In einer ersten Planetenstufe ist ein Stufenplanet aufgenommen. Eine der Eingangswellen ist zum Bereitstellen einer Grundantriebsleistung ausgebildet und die andere Eingangswelle zum Bereitstellen einer Regelantriebsleistung.

WO 2009/016508 A2 offenbart ein Getriebe zum Verwendung in einer Windkraftanlage, das zwei hintereinandergeschaltete Planetenstufen aufweist. Die hintereinandergeschalteten Planetenstufen sind über eine Stirnradstufe mit einer weiteren Planetenstufe gekoppelt. Eine Sonnenwelle der weiteren Planetenstufe ist über eine Kupplung mit einem Hilfsmotor bzw. Hilfsgenerator verbindbar. Durch den Hilfsmotor bzw. Hilfsgenerator ist eine Ausgangsdrehzahl, mit der ein Hauptgenerator angetrieben wird, einstellbar.

In der Getriebetechnik besteht Bedarf an Getrieben, die dazu geeignet sind, höhere Wellenleistungen von einer Eingangswelle zu einer Ausgangswelle zu transportieren und dabei die Drehzahl und korrespondieren das vorliegende Drehmoment in einem angestrebten Ausmaß zu verändern. Insbesondere werden höhere Gesamtübersetzungsverhältnisse für höhere Antriebsleistungen angestrebt. Gleichzeitig bestehen Anforderungen an eine einfache und wirtschaftliche Herstellung entsprechender Getriebe. Ebenso wird eine kompakte Bauform solcher Getriebe gewünscht. Diese Zielsetzungen bestehen in besonderem Umfang im Bereich der Windkraftanlagentechnik und bei Getrieben für industrielle Anlagen. Der Erfindung liegt die Aufgabe zugrunde, ein Getriebe bereitzustellen, das in zumindest einem dieser Aspekte eine Verbesserung bietet.

Die Aufgabenstellung wird durch das erfindungsgemäße Planetengetriebe gelöst. Das Planetengetriebe umfasst zumindest drei hintereinandergeschaltete Getriebestufen, die miteinander in Eingriff stehen. Durch die Hintereinanderschaltung wird eine zugeführte Antriebsleistung vollständig, also unverzweigt, durch jede Getriebestufe geführt. Die erste und zweite Getriebestufe sind dabei als Planetenstufen ausgebildet, wobei jede der Planetenstufen als Getriebekomponenten ein Hohlrad, einen Planetenträger mit darin drehbar aufgenommenen Planetenrädern, und ein Sonnenrad umfasst. Die zweite Getriebestufe ist unmittelbar zwischen der ersten und dritten Getriebestufe angeordnet. Erfindungsgemäß ist die zweite Getriebestufe mit der dritten Getriebestufe gekoppelt, die als Planetenstufe mit einer stationären Getriebekomponente ausgebildet ist.

Alternativ kann die dritte Getriebestufe auch als Stirnradstufe ausgebildet sein. Eine solche als Stirnradstufe ausgebildete dritte Getriebestufe ist wiederum mit einer vierten Getriebestufe gekoppelt, die ebenfalls als Stirnradstufe ausgebildet ist. Folglich weist die skizzierte Alternative des Planetengetriebes eine Hintereinanderschaltung von zwei Planetenstufen und zwei Stirnradstufen auf. Der Erfindung liegt unter anderem die Erkenntnis zugrunde, dass mittels einer Hintereinanderschaltung von zumindest drei Planetenstufen oder von zwei Planetenstufen und zwei Stirnradstufen ein erhöhtes Gesamtübersetzungsverhältnis und einer erhöhte Drehmomentdichte erzielbar ist. Gleichzeitig sind entsprechende Planetengetriebe auch bei einer Auslegung für erhöhte Antriebsleistungen überraschend kompakt. Das erhöhte Gesamtübersetzungsverhältnis wiederum erlaubt bei Windkraftanlagen den Einsatz von Generatoren mit einer reduzierten Anzahl an Polpaaren. Je niedriger die sogenannte Polpaarzahl ist, umso einfacher und wirtschaftlicher ist der Generator herstellbar. Insbesondere sind, je nach Ausführungsform der Erfindung bei gleichbleibend dimensionierten Windkraftanlagen, Generatoren mit lediglich vier Polpaaren einsetzbar, vorzugsweise sogar Generatoren mit lediglich zwei Polpaaren. Das erfindungsgemäße Planetengetriebe erlaubt es, bei gleichbleibender Dimensionierung der Windkraftanlage, für diese einfachere Generatoren einzusetzen. Gleichermaßen bietet das erfindungsgemäße Getriebe eine vorteilhafte Möglichkeit, bestehende Windkraftanlagen im Zuge einer Nachrüstung wirtschaftlicher zu machen.

In einer Ausführungsform des beanspruchten Planetengetriebes, in der die dritte Getriebestufe als Planetenstufe ausgebildet ist, ist diese zu einer direkten Kopplung mit einem Generator ausgebildet. Dabei weist der Generator vorzugsweise drei oder vier Polpaare auf. Unter einer direkten Kopplung ist eine drehmomentübertragende Verbindung zu verstehen, bei der die vorliegende Drehzahl und das vorliegende Drehmoment gleich bleiben, also keine Getriebewirkung mehr vorliegt. Bei der so erzielten Hintereinanderschaltung von drei Planetenstufen sind die Eingangswelle und eine Ausgangswelle des Planetengetriebes im Wesentlichen koaxial ausgebildet, das in eine Radialrichtung eine Platzersparnis bietet. Ferner weist ein entsprechendes Planetengetriebe ein Gesamtübersetzungsverhältnis von 20 bis 200, vorzugsweise von 40 bis 120. Derartige Drehzahlen erlauben es, basierend auf den übliche Rotordrehzahlen einer Windkraftanlage, einen Generator mit zwei bis vier Polpaaren einzusetzen.

Alternativ kann die dritte Getriebestufe auch mit einer vierten Getriebestufe verbunden sein, die als Stirnradstufe ausgebildet ist. Ein entsprechendes Planetengetriebe weist drei hintereinandergeschaltete Planetenstufen und eine dahinter geschaltete Stirnradstufe auf. Bei einem solchen Planetengetriebe wird das Gesamtübersetzungsverhältnis durch die Kombination von vier Getriebestufen erzielt, die jeweils eine reduzierte Standübersetzung aufweisen. Durch die reduzierten Standübersetzungen der Getriebestufen werden diese bei gleichbleibender zu transportierender Antriebsleistung mechanisch geringer beansprucht. Dies erlaubt es wiederum, die einzelnen Getriebestufen, insbesondere die erste und/oder zweite Getriebestufe, in Radialrichtung platzsparend auszubilden und dadurch ein kompaktes Planetengetriebe bereitzustellen. Ferner ist bei gleichbleibenden Abmessungen ein erhöhtes Gesamtübersetzungsverhältnis erreichbar. Im Einzelnen weist ein entsprechendes Planetengetriebe ein Gesamtübersetzungsverhältnis von 50 bis 350 auf, bevorzugt von 100 bis 220 auf. Je höher das Gesamtübersetzungsverhältnis des beanspruchten Planetengetriebes ist, umso geringer ist die erforderliche Polpaaranzahl des anzutreibenden Generators. Vorzugsweise ist das beanspruchte Planetengetriebe an der vierten Getriebestufe zu einer direkten Kopplung mit einem Generator mit zwei oder drei Polpaaren ausgebildet.

Gemäß einer der skizzierten Alternativen kann im beanspruchten Planetengetriebe eine vierte Getriebestufe vorgesehen sein, die als Stirnradstufe ausgebildet ist. Die vierte Getriebestufe ist dabei mit der dritten Getriebestufe verbunden, die auch als Stirnradstufe ausgebildet ist. Bei dieser Alternative weist das beanspruchte Planetengetriebe eine Hintereinanderschaltung von zwei Planetenstufen und zwei Stirnradstufen auf. Des Weiteren kann die vierte Getriebestufe zu einer direkten Kopplung mit einem Generator ausgebildet sein, der zwei, drei, vier acht oder 16 Polpaare aufweist. Das Planetengetriebe bietet ein erhöhtes Gesamtübersetzungsverhältnis, durch das eine Verwendung eines Generator mit einer entsprechend niedrigen Anzahl an Polpaaren ermöglicht wird. Dadurch wird die Verwendung eines einfacheren und kosteneffizienteren Generators ermöglicht. Das Planetengetriebe bietet ferner eine Platzersparnis in axialer Richtung, also entlang einer Hauptdrehachse des Planetengetriebes. Darüber hinaus sind Stirnradstufen in einfacher und kosteneffizienter Weise herstellbar. Insgesamt wird die Wirtschaftlichkeit eines Antriebsstrangs einer Windkraftanlage, der mit einem entsprechenden Planetengetriebe ausgestattet ist, erhöht.

In einer weiteren Ausführungsform des beschriebenen Planetengetriebes ist jeweils ein Hohlrad der ersten und/oder zweiten Getriebestufe als stationäre Getriebekomponente ausgebildet, also das entsprechende Hohlrad sich im Betrieb nicht um die Hauptdrehachse des Planetengetriebes dreht. Hohlräder stellen typischerweise die schwersten Getriebekomponenten dar, so dass durch ein stationäres Hohlrad die rotierenden Massen reduziert werden, was wiederum die Laufruhe des Planetengetriebes erhöht. Bei derartigen Planetenstufen werden Antriebsleistung und Abtriebsleistung nur über den zugehörigen Planetenträger bzw. das Sonnenrad zu- und abgeführt. Dementsprechend sind derartige Planetenstufen in einfacher Weise mit benachbarten Getriebestufen koppelbar. Insgesamt ist so eine einfache, zuverlässige und geräuscharme Kombination mehrerer Planetenstufen oder einer Planetenstufe mit einer Stirnradstufe erzielbar.

Im beanspruchten Planetengetriebe kann die erste Getriebestufe fünf bis zwölf, vorzugsweise sieben bis zehn Planetenräder aufweisen. Je höher die Anzahl an Planetenrädern in einer Planetenstufe ist, umso geringer ist die mit der Planetenstufe erzielbare Standübersetzung. Gleichzeitig werden die mechanischen Beanspruchungen, die sich aus der eingeleiteten Antriebsleistung ergeben, auf eine erhöhte Anzahl an Planetenrädern und Kontaktstellen im Hohlrad verteilt. Eine derartige gleichmäßigere Verteilung bietet eine lokale Reduzierung der mechanischen Beanspruchungen, was wiederum mit einer erhöhten Drehmomentdichte, einer erhöhten Lebensdauer und erhöhten Zuverlässigkeit der Planetenstufe einhergeht. Die Verwendung von drei oder vier Getriebestufen erlaubt es somit, bei reduzierten Standübersetzungen in der ersten und/oder zweiten Getriebestufe ein insgesamt erhöhtes Gesamtübersetzungsverhältnis zu erzielen und gleichzeitig die Zuverlässigkeit der Planetenstufen, also der ersten und/oder zweiten Getriebestufe, zu erhöhen. Insbesondere bei Ausführungsformen, die aus drei hintereinandergeschalteten Planetenstufen bestehen, ist eine erste Getriebestufe mit mindestens 7, besonders bevorzugt mit sieben bis zehn Planetenrädern vorteilhaft. Eine derartige erste Getriebestufe ist vorzugsweise mit einer zweiten Getriebestufe gekoppelt, die fünf bis zwölf, vorzugsweise sieben bis zehn Planetenräder aufweist. Weiter bevorzugt können die Planetenräder derart ausgestaltet sein, dass die im Wesentlichen die gleichen Abmessungen aufweisen, besonders bevorzugt gegenseitig austauschbar ausgebildet sind. Dies erlaubt es, die Planetenräder für die erste und zweite Getriebestufe aus den gleichen Rohteilen zu fertigen, was die Herstellung des Planetengetriebes vereinfacht. Bei Verwendung von Planetenrädern in der ersten und zweiten Getriebestufe, die gegeneinander austauschbar sind, ist eine Gleichteileverwendung möglich, was wiederum eine noch größere Vereinfachung in der Herstellung erlaubt. Dem liegt unter anderem die überraschende Erkenntnis zugrunde, bei der Wahl der entsprechenden Anzahlen an Planetenrädern in den einzelnen Getriebestufen sowohl die Drehmomentdichte erhöht wird und gleichzeitig die Fertigung erheblich einfacher und wirtschaftlicher wird. Die dritte Getriebestufe weist bei einer solchen Ausführungsform mindestens drei, vorzugsweise mindestens vier oder fünf Planetenräder auf. Bei entsprechenden Anzahlen an Planetenrädern in den einzelnen Getriebestufen werden die technischen Vorteile des beanspruchten Planetengetriebes in besonderem Umfang erzielt. Insbesondere erlaubt ein entsprechendes Planetengetriebe es, zweistufige Planetengetriebe in technisch zumindest gleichwertiger Weise kosteneffizient zu ersetzen. Ferner kann durch eine geeignete Wahl an Anzahlen von Planetenrädern das beanspruchte Planetengetriebe auf eine Vielzahl an Gesamtübersetzungsverhältnissen eingestellt werden, was ein breites mögliches Einsatzspektrum bietet.

In einer weiteren Ausführungsform des beanspruchten Planetengetriebes ist eine Eingangswelle zu einem Einleiten eines Drehmoments von mindestens 1500 kNm ausgebildet. Dies entspricht circa einer Windkraftanlage mit 1,5 MW Nennleistung. Bevorzugt ist die Eingangswelle zu einem Einleiten eines Drehmoments von 1500 kNm bis 20000 kNm ausgebildet. Bei Verwendung in einer Onshore-Windkraftanlage ist die Eingangswelle vorzugsweise zum Einleiten eines Drehmoments von 1500 kNm bis 10000 kNm ausgebildet. Bei Verwendung in einer Offshore-Windkraftanlage ist die Eingangswelle vorzugsweise zum Einleiten eines Drehmoments von 5000 kNm bis 20000 kNm ausgebildet. Diese Wertebereiche korrespondieren im Wesentlichen mit den Nennleistungsbereichen entsprechender Windkraftanlagen. Darüber hinaus ist das beanspruchte Planetengetriebe auch dazu geeignet, mit einer Eingangswelle ausgestattet zu sein, die dazu ausgelegt ist, auch Drehmomente über 20000 kNm ins Planetengetriebe einzuleiten. Infolgedessen ist das beanspruchte Planetengetriebe skalierbar und auch für künftige Windkraftanlagen geeignet, die noch höhere Nennleistungen bieten werden. Dem beanspruchten Planetengetriebe liegt unter anderem die Erkenntnis zugrunde, dass bereits ab Antriebsleistungen mit einem Drehmoment von ca. 1500 kNm zumindest eine zusätzliche Getriebestufe neben einem erhöhten Gesamtübersetzungsverhältnis auch eine verringerte oder zumindest gleichbleibende Größe, insbesondere in puncto Außendurchmesser, bietet und gleichzeitig in einfacher und wirtschaftlicher Weise herstellbar ist.

In einer weiteren Ausführungsform des beanspruchten Planetengetriebes kann die erste Getriebestufe eine Standübersetzung von 2,5 bis 4,4 aufweisen. Zusätzlich oder alternativ kann die zweite Getriebestufe eine Standübersetzung von 2,5 bis 6 aufweisen. Vorzugsweise sind die Standübersetzungen der ersten und zweiten Getriebestufe im Wesentlichen gleich groß, so dass die Standübersetzungen der ersten und zweiten Getriebestufe entsprechend minimiert sind. Dadurch werden der größte Außendurchmesser, die Getriebelänge des Planetengetriebes und dessen Gewicht, die für einen Transport des Planetengetriebes maßgeblich sind, reduziert. Das beanspruchte Planetengetriebe ist infolgedessen einfach zu transportieren, was wiederum eine vereinfachte Montage mit erhöhter Wirtschaftlichkeit bei der Herstellung einer Windkraftanlage erlaubt. Des Weiteren wird die Turmkopfmasse einer Windkraftanlage mit einem entsprechenden Planetengetriebe reduziert, wodurch weitere konstruktive Einsparungen an der Windkraftanlage erzielt werden können, beispielsweise durch eine leichtere Turmkonstruktion.

Ferner kann im beschriebenen Planetengetriebe der Planetenträger der zweiten Getriebestufe drehstarr mit einem Sonnenrad der ersten Getriebestufe verbunden sein. Eine derartige drehstarre Verbindung kann in einfacher Weise über eine Kurzverzahnung an einer Nabe des Planetenträgers der zweiten Getriebestufe und am Sonnenrad der ersten Getriebestufe hergestellt werden. Dies erlaubt eine vorteilhafte Hintereinanderschaltung der ersten und zweiten Getriebestufe. Eine derartige drehstarre Verbindung zwischen der ersten und zweiten Getriebestufe ist in einfacher Weise herstellbar und ist auch schnell montierbar. Diese Verbindung kann alternativ oder ergänzend auch starr ausgeführt werden, beispielsweise durch Stoffschluss oder Formschluss.

Im beanspruchten Planetengetriebe kann ferner der Planetenträger der ersten und/oder der dritten Getriebestufe jeweils drehbar in einem Lager aufgenommen sein, das an einer Wandung des Gehäuses angebracht ist. Infolgedessen sind die Getriebestufen, die als Planetenstufen ausgebildet sind, nur einseitig am Gehäuse gelagert. Die weiteren Getriebekomponenten stellen sich in ihrer Lage durch die im Betrieb vorliegende Antriebsleistung ein, die durch die Getriebekomponenten geleitet wird. Hierdurch wird im Betrieb eine sich selbst einstellende Zentrierung erzielt. Insbesondere wird durch die Reduzierung der eingesetzten Lager die Anzahl an mechanischen Zwangsbedingungen reduziert. Für die Planetenträger der zweiten und dritten Getriebestufe beispielsweise sind jeweils Radiallager entbehrlich. Stattdessen können die Planetenträger der zweiten und dritten Getriebestufe nur mit Führungslagern, vorzugsweise für reduzierte Drehmomentbereiche, ausgestattet sein. Die Verwendung von Axiallagern ist für die Planetenträger der zweiten und dritten Getriebestufe nur dann erforderlich, wenn eine Schrägverzahnung eingesetzt wird. Die verwendeten Lager, die an der Wandung des Gehäuses angebracht sind, können dabei als Wälzlager oder Gleitlager ausgebildet sein. Bei der Verwendung von Gleitlagern wird der Aufwand zur Bereitstellung von Schmierstoff, beispielsweise durch Schmierstoffkanäle, verringert, was wiederum die Herstellung des Planetengetriebes vereinfacht. Des Weiteren wird der Aufwand zur Einstellung der Lager, sowohl bei Wälzlagern als auch bei Gleitlagern, erheblich reduziert. Ferner wird der Bedarf an präzise gefertigten Lageraufnahmen verringert, was die Fertigung des Planetengetriebes weiter vereinfacht und kosteneffizienter gestaltet.

In einer weiteren Ausführungsform des beanspruchten Planetengetriebes ist zumindest eine der Getriebestufen dazu ausgebildet, in das Planetengetriebe eine Regelleistung einzukoppeln. Die Regelleistung dient dazu, eine schwankende Antriebsleistung auszugleichen und einen möglichst konstanten Betrieb eines angeschlossenen Generators oder einer mechanischen Anwendung zu gewährleisten. Die Regelleistung ist durch eine Regelvorrichtung kann als elektrische Maschine, insbesondere als Motor-Generator, ausgebildet sein. Eine elektrische Maschine erlaubt ein schnelles Umschalten von einem Motorbetrieb auf einen Generatorbetrieb, so dass zusätzlich ein antreibendes oder bremsendes Drehmoment bereitstellbar ist.

Dazu kann bei der Getriebestufe, die mit der Regelvorrichtung verbunden ist, jedes der Getriebekomponenten drehbar ausgebildet sein. Beispielsweise kann ein Hohlrad der entsprechenden Getriebestufe mit der Regelvorrichtung drehmomentübertragend verbunden sein. Ferner kann die Getriebestufe, die mit der Regelvorrichtung verbunden ist, eine Planetenstufe sein. Vorzugsweise ist die dritte Getriebestufe als Planetenstufe ausgebildet und mit der Regelvorrichtung gekoppelt. In der dritten Getriebestufe liegen Drehzahlen vor, die in vorteilhaft einfacher Weise eine genaue Regelung der Abtriebsleistung erlaubt, die an den Generator oder die mechanische Anwendung weitertransportiert wird. Unter der Regelung mittels der Regelvorrichtung ist hierbei sowohl eine Beeinflussung mit einer geschlossenen Regelschleife und/oder einer offenen Regelschleife, also eine Steuerung, zu verstehen.

Die beschriebene Aufgabenstellung wird auch durch einen erfindungsgemäßen Antriebsstrang gelöst. Der Antriebsstrang ist zur Verwendung in einer Windkraftanlage ausgelegt und umfasst eine Rotorwelle, die mit einem Rotor der Windkraftanlage verbindbar ist. Der Antriebsstrang umfasst auch ein Getriebe, das drehmomentübertragend mit der Rotorwelle verbunden ist. Ferner weist der Antriebsstrang einen Generator auf, der auch drehmomentübertragend mit dem Getriebe verbunden ist. Erfindungsgemäß ist das Getriebe als ein Planetengetriebe ausgebildet nach einer der oben beschriebenen Ausführungsformen ausgebildet. Ein entsprechender Antriebsstrang weist gegenüber den aus dem Stand der Technik bekannten Lösungen bei gleichbleibenden Abmessungen eine erhöhte Leistungsfähigkeit auf, ist also dazu ausgebildet, höhere Antriebsleistungen vom Rotor der Windkraftanlage zum Generator zu transportieren. Alternativ weist ein erfindungsgemäßer Antriebsstrang bei gleichbleibender Antriebsleistung reduzierte Abmessungen gegenüber den bekannten Lösungen, insbesondere einen reduzierten Außendurchmesser am Getriebe auf. Ferner weist der Generator des Antriebsstrangs zwei bis vier Polpaare auf. Ein derartiger Generator ist einfach und kosteneffizient herstellbar. Insgesamt wird so die Wirtschaftlichkeit des Antriebsstrangs gesteigert.

Gleichermaßen wird die skizzierte Aufgabenstellung durch eine erfindungsgemäße Windkraftanlage gelöst. Die Windkraftanlage weist einen Rotor auf, der an einer Gondel angebracht ist. Der Rotor ist drehmomentübertragend mit der Rotorwelle verbunden, die wiederum einem Antriebsstrang der Windkraftanlage zugeordnet ist. Eine Drehung des Rotors wird so über die Rotorwelle in den Antriebsstrang übertragen. Die beanspruchte Windkraftanlage ist mit einem Antriebsstrang gemäß den oben beschriebenen Aspekten der Erfindung ausgebildet, verfügt also über ein Getriebe, das als Planetengetriebe nach einer der skizzierten Ausführungsformen ausgebildet ist. Durch die technischen Vorzüge des beschriebenen Antriebsstrangs ist die erfindungsgemäße Windkraftanlage leistungsfähiger, kompakter und kosteneffizienter als bekannte Windkraftanlagen.

Die zugrundeliegende Aufgabenstellung wird auch durch eine erfindungsgemäße Industrie-Applikation gelöst, die ein Antriebsmittel aufweist, das mit einem Getriebe drehmomentübertragend verbunden ist. Das Antriebsmittel kann dabei beispielsweise als Elektromotor, als Verbrennungsmotor, oder als Hydraulikmotor ausgebildet sein. Das Getriebe ist dazu ausgebildet, eine vom Antriebsmittel bereitgestellte Antriebsleistung unter Wandlung von Drehzahl und Drehmoment als Abtriebsleistung an eine mechanische Anwendung weiter zu transportieren. Dazu ist eine drehmomentübertragende Verbindung zwischen dem Getriebe und der mechanischen Anwendung hergestellt. Die mechanische Anwendung kann dabei als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung Müllpresse oder Schrottpresse ausgebildet sein. Erfindungsgemäß ist das Getriebe in der Industrie-Applikation als ein Planetengetriebe nach einer der skizzierten Ausführungsformen ausgebildet. Dabei kann das Planetengetriebe auch derart mit dem Antriebsmittel und der mechanischen Anwendung verbunden sein, dass vom Antriebsmittel zur mechanischen Anwendung hin eine Reduzierung der vorliegenden Drehzahl erzielt wird. Bei der erfindungsgemäßen Industrie-Applikation wird die vorliegende Drehmomentdichte erhöht, was beispielsweise eine kompakte Bauform erlaubt. Die technischen Vorzüge des beanspruchten Planetengetriebes werden in korrespondierender Weise auf eine Industrie-Applikation übertragen. Dabei entspricht die mechanische Anwendung technisch im Wesentlichen dem Generator, wenn das Planetengetriebe statt in einer Windkraftanlage in einer Industrie-Applikation eingesetzt wird. Der Rotor der Windkraftanlage korrespondiert hierbei mit dem Antriebsmittel.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleiche technische Bedeutung haben. Es zeigen im Einzelnen:
- FIG 1: eine schematische Darstellung einer ersten Ausführungsform des beanspruchten Planetengetriebes;
- FIG 2: eine schematische Darstellung einer zweiten Ausführungsform des beanspruchten Planetengetriebes;
- FIG 3: eine schematische Darstellung einer ersten Ausführungsform einer Getriebestufe eines beanspruchten Planetengetriebes im Querschnitt;
- FIG 4: eine schematische Darstellung einer zweiten Ausführungsform einer Getriebestufe eines beanspruchten Planetengetriebes im Querschnitt;
- FIG 5: eine geschnittene Schrägansicht einer Ausführungsform der beanspruchten Windkraftanlage mit dem beanspruchten Antriebsstrang;
- FIG 6: eine schematische Darstellung einer Ausführungsform des beanspruchten Antriebsstrangs;
- FIG 7: eine schematische Darstellung einer beanspruchten Industrie-Applikation.

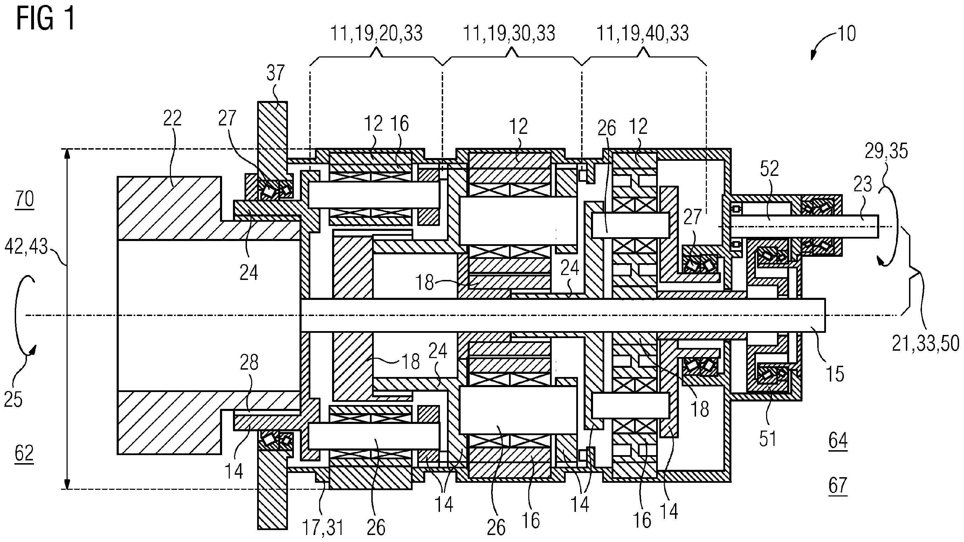

FIG 1 zeigt schematisch den Aufbau einer ersten Ausführungsform des beanspruchten Planetengetriebes 10, das unter anderem zur Verwendung in einer nicht näher dargestellten Windkraftanlage 70 ausgebildet ist. Das Planetengetriebe 10 weist eine erste, eine zweite und eine dritte Getriebestufe 20, 30, 40 auf, die als Planetenstufen 19 ausgebildet sind. Die Getriebestufen 20, 30, 40, die als Planetenstufen 19 ausgebildet sind, weisen jeweils eine Mehrzahl an Getriebekomponenten 11 auf. Zu den Getriebekomponenten 11 gehören unter anderem je Planetenstufe 19 ein Hohlrad 12, ein Planetenträger 14, an dem eine Mehrzahl an Planetenrädern 16 drehbar angebracht ist, und ein Sonnenrad 18. Das Planetengetriebe 10 weist eine Eingangswelle 22 auf, die bei einer Verwendung des Planetengetriebes 10 in einer Windkraftanlage 70 mit einer nicht näher dargestellten Rotorwelle 62 verbindbar ist oder einstückig mit der Rotorwelle 62 ausgebildet ist. Über die Eingangswelle 22 ist eine Antriebsleistung 25 ins Planetengetriebe 10 einleitbar. Die Eingangswelle 22 ist mit einer Kurzverzahnung 28 versehen, die in eine korrespondierende Kurzverzahnung 28 an einer sogenannten langen Nabe 24 des Planetenträgers 14 der ersten Getriebestufe 20 eingreift. Im Bereich der Kurzverzahnung 28 ist der Planetenträger 14 der ersten Getriebestufe 20 drehbar in einem Lager 27 aufgenommen, das an einer Wandung 31 eines Gehäuses 17 befestigt ist. Das Lager 27 ist dabei als zweireihiges Wälzlager ausgebildet. Über die Kurzverzahnung 28 und den Planetenträger 14 der ersten Getriebestufe 20 wird die Antriebsleistung 25 in das Planetengetriebe 10 eingeleitet. Das Hohlrad 12 der ersten Getriebestufe 20 ist drehstarr mit dem Gehäuse 17 verbunden, so dass das Hohlrad 12 im Betrieb keine Drehung um eine Hauptdrehachse 15 des Planetengetriebes 10 vollführt. In das Hohlrad 12 der ersten Getriebestufe 20 greifen Planetenräder 16 ein, die jeweils auf einer Planetenradachse 26 drehbar aufgenommen sind. Die erste Getriebestufe 20 weist eine Standübersetzung 33 von im Wesentlichen 2,5 bis 4,4 auf.

Die Planetenräder 16 der ersten Getriebestufe 20 stehen wiederum im Eingriff mit einem Sonnenrad 18, das mit einer Kurzverzahnung 28 versehen ist. Darüber ist das Sonnenrad 16 der ersten Getriebestufe 20 mit der langen Nabe 24 des Planetenträgers 14 der zweiten Getriebestufe 20 verbunden. Die zweite Getriebestufe ist im Wesentlich so aufgebaut wie die erste Planetenstufe. Die erste Getriebestufe 20 weist mindestens fünf, vorzugsweise sechs oder sieben Planetenräder 16 auf, durch die die Standübersetzung 33 der ersten Getriebestufe 20 beeinflusst wird. Die zweite Getriebestufe 30 weist mindestens vier, vorzugsweise sechs oder sieben Planetenräder 16 auf. Wie bei der ersten Getriebestufe 20, wird durch die Anzahl der Planetenräder 16 mit definiert, welche Standübersetzung 33 die zweite Getriebestufe 30 aufweist. Die zweite Getriebestufe 30 weist eine Standübersetzung 33 von im Wesentlichen 2,5 bis 6,0 auf. In gleicher Weise wie die erste und die zweite Planetenstufe 20, 30 ist die dritte Getriebestufe 40 hinter die zweite Getriebestufe 30 geschaltet. Die Antriebsleistung 25, die über die Eingangswelle 22 in das Planetengetriebe 10 eingeleitet wird, wird im Betrieb somit von der ersten Getriebestufe 20 an die zweite Getriebestufe 30 und von dort an die dritte Getriebestufe 40 weitertransportiert. Die dritte Getriebestufe 40 ist auch als Planetenstufe 19 ausgebildet und weist einen Planetenträger 14 auf, der drehbar in einem Lager 27 aufgenommen ist. Das Lager 27 ist als zweireihiges Wälzlager ausgebildet und ist an einer Wandung 31 des Gehäuses 17 befestigt. Ferner weist die dritte Getriebestufe 50 mindestens drei Planetenräder 16, vorzugsweise vier oder fünf Planetenräder 16 auf. Die drei Getriebestufen 20, 30, 40 sind aufseiten der Eingangswelle 22 und einer Ausgangswelle 23 in lediglich zwei Lagern am Gehäuse 17 gelagert. Dadurch sind die mechanischen Zwangsbedingungen, die auf die Getriebekomponenten 11 im Betrieb einwirken, reduziert. Zwischen den Getriebekomponenten 11 wird im Betrieb vorrangig durch die eingeleitete Antriebsleistung 25, und die daraus resultierenden Kräfte, ein Gleichgewichtszustand hervorgerufen. Dadurch wird die Geräuschentwicklung im Betrieb reduziert.

Das Sonnenrad 18 der dritten Getriebestufe 40 ist ferner mit einer vierten Getriebestufe 50 verbunden, die als Stirnradstufe 21 ausgebildet ist. Die Stirnradstufe 21 umfasst ein Stirnrad 51 und ein korrespondierendes Ritzel 52 und weist eine Standübersetzung 33 auf. Die Stirnradstufe 21 weist ferner eine Ausgangswelle 23 auf, an der eine Abtriebsleistung 29 aus dem Planetengetriebe 10 ausleitbar ist. Die Abtriebsleistung 29 entspricht, unter Berücksichtigung von mechanischen Verlusten, im Wesentlichen der Antriebsleistung 25. Die Drehzahl der Abtriebsleistung 29 ist gegenüber der Drehzahl der Antriebsleistung 25 korrespondierend zu einem Gesamtübersetzungsverhältnis 35 gesteigert, das wiederum durch die Standübersetzungen 33 der vier Getriebestufen 20, 30, 40, 50 bestimmt ist. Das erzielte Gesamtübersetzungsverhältnis 35 des Planetengetriebes 10 ist derart ausgebildet, dass die Ausgangswelle 23 direkt mit einem nicht näher dargestellten Generator 64 koppelbar ist, der lediglich zwei oder drei Polpaare 67 aufweist, die in FIG 1 nicht näher dargestellt sind. Durch die entsprechende Anzahl an Planetenrädern 16 in den Planetenstufen 19 der ersten, zweiten und dritten Getriebestufe 20, 30, 40 weisen die erste, zweite und dritte Getriebestufe 20, 30, 40 einen im Wesentlichen gleichen Außendurchmesser 42 auf. Dadurch wird der für einen Transport des Planetengetriebes 10 maßgebliche größte Außendurchmesser 43, minimiert. Die Abmessungen von Drehmomentstützen 37, die am Gehäuse 17 befestigt sind, bleiben bei dieser Betrachtung unberücksichtigt.

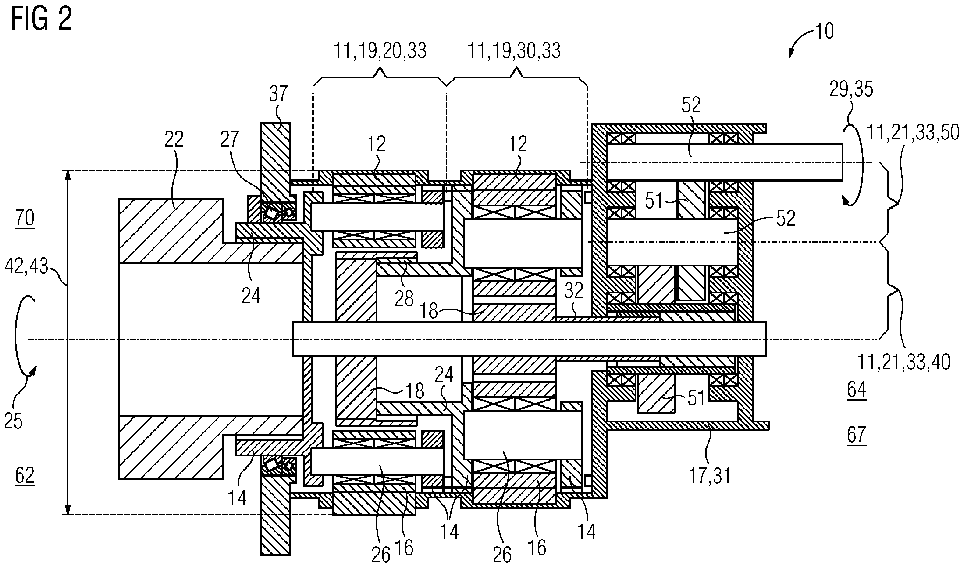

In FIG 2 ist schematisch der Aufbau einer zweiten Ausführungsform des beanspruchten Planetengetriebes 10 dargestellt, das zur Verwendung in einer nicht näher abgebildeten Windkraftanlage 70 ausgelegt ist. Das Planetengetriebe 10 weist eine erste und eine zweite Getriebestufe 20, 30 auf, die jeweils als Planetenstufen 19 ausgebildet sind. Jede der Planetenstufen 19 weist eine Mehrzahl an Getriebekomponenten 11 auf, zu denen unter anderem jeweils ein Hohlrad 12, ein Planetenträger 14 und ein Sonnenrad 18 gehören. Im Planetenträger 14 ist in jeder der beiden Planetenstufen 19 eine Mehrzahl an Planetenrädern 16 jeweils auf einer Planetenradachse 26 drehbar aufgenommen, die mit dem zugehörigen Hohlrad 12 und dem zugehörigen Sonnenrad 18 in Eingriff stehen. Ferner weist das Planetengetriebe 10 eine Eingangswelle 22 auf, die mit einer nicht näher dargestellten Rotorwelle 62 verbindbar ist oder mit dieser einstückig ausgebildet ist. Die Eingangswelle 22 ist mit einer Kurzverzahnung 28 versehen, die in eine korrespondierende Kurzverzahnung 28 an einer sogenannten langen Nabe 24 eingreift. Über die Eingangswelle 22 wird eine Antriebsleistung 25 in die erste Getriebestufe 20, nämlich in den zugehörigen Planetenträger 14, eingeleitet und an die zweite Getriebestufe 30 weitergeleitet. Der Planetenträger 14 der ersten Getriebestufe 20 ist drehbar in einem Lager 27 aufgenommen, das an einer Wandung 31 des Gehäuses 17 angebracht ist. Dabei ist das Lager 27 als zweireihiges Wälzlager ausgebildet. Ein Sonnenrad 18 der ersten Getriebestufe 20 ist mit einer Kurzverzahnung 28 versehen, in die eine lange Nabe 24 des Planetenträger 14 der zweiten Getriebestufe 30 eingreift. Dazu ist der Planetenträger 14 an der langen Nabe 24 mit einer korrespondierenden Kurzverzahnung 28 ausgestattet. Die zweite Getriebestufe 30 ist im Wesentlichen wie die erste Getriebestufe 20 aufgebaut. Das Sonnenrad 18 der zweiten Getriebestufe 30 ist darüber hinaus über eine Sonnenwelle 32 mit der dritten Getriebestufe 40 gekoppelt. Die dritte Getriebestufe 40 ist als Stirnradstufe 21 ausgebildet und weist als Getriebekomponenten 11 ein Stirnrad 51 auf, das mit einem Ritzel 52 kämmt. Das Ritzel 52 der dritten Getriebestufe 40 gehört auch zur vierten Getriebestufe 50, die auch als Stirnradstufe 21 ausgebildet ist. Ferner weist die vierte Getriebestufe 50 ein Stirnrad 51 auf, das mit einem Ritzel 52 kämmt, das wiederum mit einer Ausgangswelle 23 des Planetengetriebes 10 verbunden ist. Die dritte und vierte Getriebestufe 40, 50 weisen jeweils eine Standübersetzung 33 auf, durch die eine Drehzahl des Sonnenrads 18 der zweiten Getriebestufe 30 weiter gesteigert wird. An der Ausgangswelle 23 des Getriebes ist ein nicht näher dargestellter Generator 64 anschließbar, der in vorteilhafter Weise lediglich zwei Polpaare 67 aufweist, die in FIG 2 nicht näher dargestellt sind. Über die Ausgangswelle 23 wird eine Abtriebsleistung 29 an den Generator 64 abgegeben, die im Wesentlichen, unter Berücksichtigung mechanischer Verluste, der Antriebsleistung 25 entspricht. Bei der Abtriebsleistung 29 ist gegenüber der Antriebsleistung 25 die vorliegende Drehzahl gemäß einem Gesamtübersetzungsverhältnis 35 erhöht. Das Gesamtübersetzungsverhältnis 35 wird durch die Verkettung, also die Hintereinanderschaltung der vier Getriebestufen 20, 30, 40, 50 bestimmt.

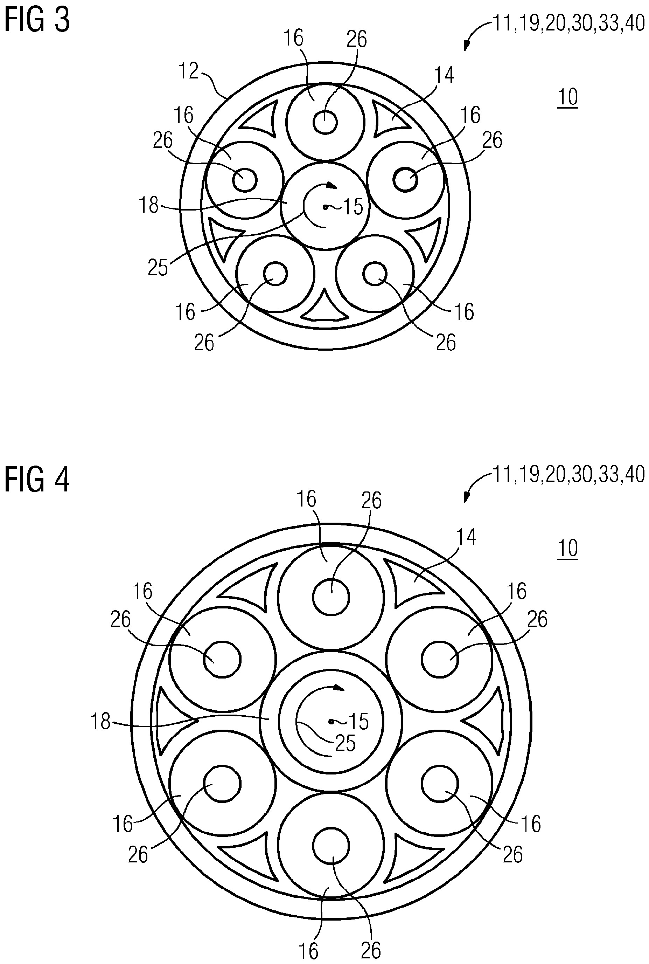

Ferner ist in FIG 3 im Querschnitt eine erste Ausführungsform einer Getriebestufe 20, 30, 40 abgebildet, die als Planetenstufe 19 ausgebildet ist. Die Planetenstufe 19 umfasst als Getriebekomponenten 11 ein Hohlrad 12, das mit fünf Planetenrädern 16 kämmt. Jedes der Planetenräder 16 ist dazu drehbar auf einer Planetenradachse 26 aufgenommen. Jede der Planetenradachsen 26 ist mit einem Planetenträger 14 verbunden. Die Planetenräder 16 rotieren im Betrieb um eine Hauptdrehachse 15 eines nicht näher dargestellten Planetengetriebes 10. Die Planetenräder 16 wiederum kämmen mit einem Sonnenrad 18, über das eine Antriebsleistung 25 zu einer benachbarten Getriebestufe 20, 30, 40 drehmomentübertragend weitertransportierbar ist. Die Planetenstufe 19 nach FIG 3 ist als erste, zweite oder dritte Getriebestufe 20, 30, 40 in einem Planetengetriebe 10 einsetzbar und bietet eine feststehende Standübersetzung 33.

Korrespondierend zu FIG 4 zeigt FIG 3 im Querschnitt eine zweite Ausführungsform einer Planetenstufe 19, die als erste, zweite oder dritte Getriebestufe 20, 30, 40 einsetzbar ist. Gleiche Bezugszeichen haben in FIG 3 und FIG 4 die gleiche technische Bedeutung. Im Unterschied zu FIG 3 weist die Planetenstufe 19 in FIG 4 sieben Planetenräder 16 auf. Die Planetenräder 16 in FIG 3 und FIG 4 weisen im Wesentlichen gleiche Größen auf und sind aus dem gleichen Rohling herstellbar. Dadurch wird eine erheblich Vereinfachung in der Herstellung des zugehörigen Planetengetriebes 10 erreicht. Darüber hinaus werden mechanische Beanspruchungen in den Planetenräder 16 auf entsprechend viele Kontaktstellen am Hohlrad 12 verteilt. Je höher die Anzahl der Planetenräder 16 ist, umso gleichmäßiger ist diese Verteilung der mechanischen Beanspruchung.

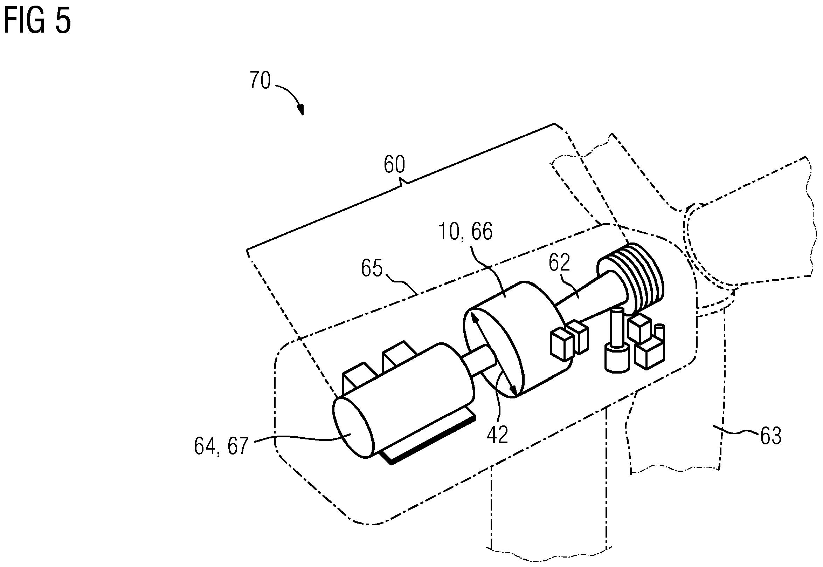

In FIG 5 ist in einer geschnittenen Schrägansicht eine Ausführungsform einer erfindungsgemäßen Windkraftanlage 70 dargestellt. Die Windkraftanlage 70 umfasst einen Rotor 63, der durch Wind in Drehung versetzbar ist. Der Rotor 63 ist über eine Rotorwelle 62 mit einem Getriebe 66 drehmomentübertragend verbunden. Das Getriebe 66 wiederum ist drehmomentübertragend mit einem Generator 64 verbunden. Die Rotorwelle 62, das Getriebe 66 und der Generator 64 gehören zu einem Antriebssatz 60 der in einer Gondel 65 der Windkraftanlage 70 aufgenommen ist. Der Generator 64 weist zwei, drei oder vier Polpaare Das Getriebe 66 ist gemäß einer der oben beschriebenen Ausführungsformen ausgebildet. Durch ein entsprechend ausgebildetes Getriebe 66 wird die Effizienz der Windkraftanlage 70 gesteigert. Insbesondere bietet ein beanspruchtes Planetengetriebe 10 einen reduzierten Durchmesser 42, was die Montage der Windkraftanlage 70 erleichtert.

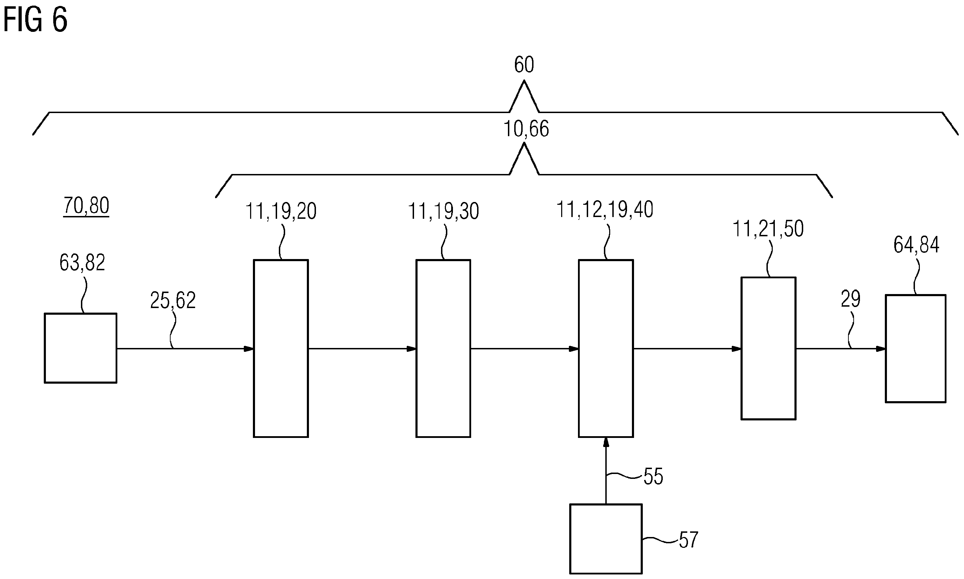

FIG 6 zeigt einen schematischen Aufbau einer weiteren Ausführungsform des beanspruchten Antriebsstrangs 60, der in einer nicht näher dargestellten Windkraftanlage 70 oder einer nicht näher dargestellten Industrie-Applikation 80 einsetzbar ist. Der Antriebsstrang 60 umfasst ein Getriebe 66, das mit eingangsseitig mit einem Antriebsmittel 82 oder einem Rotor 63 der Windkraftanlage 70 verbunden ist und dem so eine Antriebsleistung 25 zugeführt wird. In einer Windkraftanlage 70 erfolgt die mittels einer Rotorwelle 62. Das Getriebe 66 ist als Planetengetriebe 10 ausgebildet und umfasst eine erste, eine zweite, eine dritte und eine vierte Getriebestufe 20, 30, 40, 50, die jeweils eine Mehrzahl an Getriebekomponenten 11 umfassen. Die erste, zweite und dritte Getriebestufe 20, 30, 40 sind jeweils als Planetenstufen 19 ausgebildet. Die vierte Getriebestufe 50 ist als Stirnradstufe 21 ausgebildet. Die Getriebestufen 20, 30, 40, 50 sind hintereinandergeschaltet und geben eine Abtriebsleistung 29 an einen Generator 64 oder eine mechanische Anwendung 84 ab. Die dritte Getriebestufe 40 weist als Getriebekomponente 11 ein Hohlrad 12 auf, das drehbar ausgebildet ist. Insgesamt weist die dritte Getriebestufe 40 keine stationäre Getriebekomponente 11 auf. Die dritte Getriebestufe 40 ist mit einer Regelvorrichtung 57 gekoppelt, die dazu ausgebildet ist, eine Regelleistung 55 in die dritte Getriebestufe 40 einzukoppeln. Dazu ist die Regelvorrichtung 57 mit dem Hohlrad 12 der dritten Getriebestufe 40 drehmomentübertragend verbunden. Die Regelvorrichtung 57 ist als elektrische Maschine ausgebildet und dazu geeignet, als Regelleistung 55 entweder ein antreibendes oder ein bremsendes Drehmoment bereitzustellen. Damit sind Schwankungen in der Antriebsleistung 25, die vom Antriebsmittel 82 oder dem Rotor 63 bereitgestellt wird, zumindest vorübergehend ausgleichbar. Alternativ oder ergänzend ist dadurch für den Generator 64 oder die mechanische Anwendung 84 ein gewünschter Betriebspunkt einstellbar. Die Regelvorrichtung 57 ist dazu ausgebildet, einen geschlossenen Regelkreis oder einen offenen Regelkreis, also eine Steuerung, oder auch eine Kombination aus beidem, zu verwirklichen.

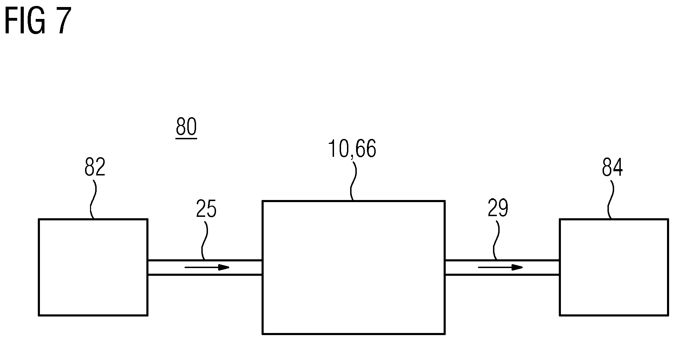

In FIG 7 ist schematisch der Aufbau einer Ausführungsform einer Industrie-Applikation 80 dargestellt, die über ein Antriebsmittel 82 verfügt. Das Antriebsmittel 82 ist dazu ausgebildet, eine Antriebsleistung 25 bereitzustellen, die durch eine drehmomentübertragende Verbindung an ein Getriebe 66 transportiert wird. Das Getriebe 66 wiederum ist drehmomentübertragend mit einer mechanischen Anwendung 84 verbunden um eine Abtriebsleistung 29 zur mechanischen Anwendung 84 zu transportieren. Das Getriebe 66 ist dazu als ein Planetengetriebe 10 nach einer der oben skizzierten Ausführungsformen ausgebildet.

## Patentansprüche

1. Planetengetriebe (10), umfassend drei hintereinander geschaltete Getriebestufen (20, 30, 40), wobei die erste und zweite Getriebestufe (20, 30) als Planetenstufen (19) ausgebildet sind, **dadurch gekennzeichnet, dass** die dritte Getriebestufe (40) als Planetenstufe (19) mit einer stationären Getriebekomponente (11) ausgebildet ist, oder als Stirnradstufe (21) ausgebildet ist, die mit einer vierten Getriebestufe (50) gekoppelt ist, die auch als Stirnradstufe (21) ausgebildet ist.

2. Planetengetriebe (10) nach Anspruch 1, wobei die dritte Getriebestufe (40) als Planetenstufe (19) ausgebildet ist, **dadurch gekennzeichnet, dass** die dritte Getriebestufe (30) zu einer direkten Kopplung mit einem Generator (64) ausgebildet ist, oder die dritte Getriebestufe (30) mit einer vierten Getriebestufe (50) verbunden ist, die als Stirnradstufe (21) ausgebildet ist.

3. Planetengetriebe (10) nach Anspruch 1, **dadurch gekennzeichnet, dass** die vierte Getriebestufe (50) zu einer direkten Kopplung mit einem Generator (64) mit drei, vier, acht oder 16 Polpaaren (67) ausgebildet ist.

4. Planetengetriebe (10) nach einem der Ansprüche 1 bis 3, **dadurch gekennzeichnet, dass** jeweils ein Hohlrad (12) der ersten und/oder zweiten Getriebestufe (20, 30) als stationäre Getriebekomponenten (11) ausgebildet ist.

5. Planetengetriebe (10) nach einem der Ansprüche 1 bis 4, **dadurch gekennzeichnet, dass** die erste Getriebestufe (20) mindestens fünf, bevorzugt mindestens sieben, besonders bevorzugt sieben bis zehn Planetenräder (16) aufweist.

6. Planetengetriebe (10) nach einem der Ansprüche 1 bis 5, **dadurch gekennzeichnet, dass** zweite Getriebestufe (30) zumindest vier, vorzugsweise fünf bis acht, besonders bevorzugt sechs oder sieben Planetenräder (16) aufweist.

7. Planetengetriebe (10) nach einem der Ansprüche 1 bis 6, **dadurch gekennzeichnet, dass** die dritte Getriebestufe (40) als Planetenstufe (19) ausgebildet und mindestens drei Planetenräder (16), vorzugsweise drei bis fünf Planetenräder (16), aufweist.

8. Planetengetriebe (10) nach einem der Ansprüche 1 bis 7, **dadurch gekennzeichnet, dass** eine Eingangswelle (22) des Planetengetriebes (10) zu einem Einleiten eines Antriebsdrehmoments (25) von mindestens 1500 kNm ausgebildet sind.

9. Planetengetriebe (10) nach einem der Ansprüche 1 bis 8, **dadurch gekennzeichnet, dass** die erste Getriebestufe (20) eine Standübersetzung von 2,5 bis 4,4 aufweist und/oder die zweite Getriebestufe (30) eine Standübersetzung von 2,5 bis 6 aufweist.

10. Planetengetriebe (10) nach einem der Ansprüche 1 bis 9, **dadurch gekennzeichnet, dass** der Planetenträger (14) der zweiten Getriebestufe (30) drehstarr mit einem Sonnenrad (18) der ersten Getriebestufe (20) verbunden ist.

11. Planetengetriebe (10) nach einem der Ansprüche 1 bis 10, **dadurch gekennzeichnet, dass** der Planetenträger (14) der ersten und/oder dritten Getriebestufe (20, 40) jeweils drehbar in einem Lager (27) aufgenommen sind, das an einer Wandung (31) des Gehäuse (17) des Planetengetriebes (10) angebracht ist.

12. Planetengetriebe (10) nach einem der Ansprüche 1 bis 11, **dadurch gekennzeichnet, dass** zumindest eine der Getriebestufen (20, 30, 40, 50) zur Einkopplung einer Regelleistung (55) ausgebildet ist.

13. Antriebsstrang (60), umfassend eine Rotorwelle (62), die drehmomentübertragend mit einem Getriebe (66) verbunden ist, das wiederum drehmomentübertragend mit einem Generator (64) verbunden ist, **dadurch gekennzeichnet, dass** das Getriebe (66) als Planetengetriebe (10) nach einem der Ansprüche 1 bis 12 ausgebildet ist.

14. Windkraftanlage (70), umfassend einen Rotor (63), der an einer Gondel (65) angebracht ist, wobei in der Gondel (65) ein Antriebsstrang (60) angeordnet ist, der drehmomentübertragend mit dem Rotor (63) verbunden ist, **dadurch gekennzeichnet, dass** der Antriebsstrang (60) nach Anspruch 13 ausgebildet ist.

15. Industrie-Applikation (80), umfassend ein Antriebsmittel (82) das mit einem Getriebe (66) drehmomentübertragend verbunden ist, das mit einer mechanischen Anwendung (84) drehmomentübertragend gekoppelt ist, **dadurch gekennzeichnet, dass** das Getriebe (66) als Planetengetriebe (10) nach einem der Ansprüche 1 bis 12 ausgebildet ist.
